# EUROPEAN PATENT APPLICATION

(11) **EP 2 166 747 A1**
(43) Date of publication of application: **24.03.2010**
(21) Application number: 08425623.9
(22) Date of filing: 23.09.2008
(51) Int. Cl.: H04N 5/00, H04N 7/24

(54) **A wireless mobile apparatus for receiving, decoding and retransmitting multistandard digital audio, video and data signals**

(71) Applicant: Aktiv Management Service S.r.L., 16149 Genova (IT)
(72) Inventor: Ghersi, Paolo, 16149 Genova (IT); Livigni, Giuseppina, 16157 Genova (IT)
(74) Representative: Borsano, Corrado

(57) **Abstract**

A wireless mobile apparatus is described that is suitable for receiving, decoding and retransmitting several multistandard digital audio/video and data signals of various types, comprising: a unit for receiving and demodulating digital audio/video and data signals received over the air; a multistream arranger unit that receives the bitstreams, simultaneously processing, decoding and carrying several digital bitstreams relating to the separate digital audio/video and data signals, and combining them into a single output stream; a main processing unit that processes and manages said single bitstream; a wireless unit for transmitting the decoded signal received from said main processing unit and sending it to one or more receiver units connected to corresponding viewer units.

## Description

### Field of the invention

The present invention relates to a wireless mobile apparatus for receiving, decoding and retransmitting numerous multistandard digital audio, video and data signals.

### State of the art

The current state of the art affords equipment for receiving and decoding digital television signals that can be divided basically into two families, i.e. set-top boxes (STB) and handheld mobile terminals.

### - Set-top boxes (STB)

A set-top box is a non-portable electronic apparatus that needs to be connected to a TV antenna.

Depending on the signal reception mode and type, STB can be divided into various receiving and decoding typologies, i.e.
- digital terrestrial (with an antenna on the roof, indoors or integrated inside the receiver) that enables the user to receive digital terrestrial TV, generally in the standard format known as Digital Video Broadcasting - Terrestrial (DVB-T);
- digital cable, which enables the user to receive digital TV through a cable connection;
- digital satellite (with a satellite dish), which enables the user to view digital satellite TV.

The set-top box must of necessity be connected by wiring to the device used to display the images and reproduce the sound in order for it to be able to serve its purpose, which is why it is equipped with one or more audio/video connectors that enable the image-displaying and sound-reproducing device to receive the audio/video stream from the set-top box, tuning it just like any television channel through the usual channel searching procedures.

The set-top boxes of known type have the following drawbacks:
- they are not mobile or portable receivers, they need a stable connection to a TV or satellite antenna. Moreover, when inside a home, for instance, they cannot be readily transferred from one room to another to enable users to watch the television programme in whichever room they wish, unless additional connections to an antenna or another receiver are available;
- users can only watch TV in a domestic setting (inside a building) and, especially in the case of satellite programmes, they must face the considerable cost of purchasing both the device for receiving the channels and calling in a technician to install and service a satellite dish;
- they can receive and process only the corresponding television standard;
- the RF output connection can only be used with television sets, not with computer screens or video projectors. It is consequently necessary to first install an antenna or satellite dish on the roof and connect it to the device;
- depending on the type of signal received, a certain range of channels is displayed, such as the free-to-air channels. Users consequently tend to purchase one appliance for receiving the digital terrestrial free-to-air channels, integrating these with channels that are available at a price (pay-to-view or on demand), which involves purchasing another receiving and decoding device;
- it is impossible to receive and retransmit different video signals/channels simultaneously:
- digital terrestrial broadcasting is still limited in its geographical coverage, so end-users cannot receive the signal everywhere;
- in order to benefit from additional functions, such as the recording or reading of personal audio/video files, for instance, users must necessarily have another device (a video recorder or reader) to connect to the decoder, with the limitations that this imposes;
- in order to interact with the television broadcaster, it is indispensable to have a return channel, such as a broadband or telephone line, or else the user would need to connect the STB to a computer;
- finally, the set-top box demands an electric power supply, so it must always be connected by means of a suitable cable to a power supply socket.
- Handheld mobile terminals

Handheld mobile terminals (or mobile TV-phones) are mobile phones designed to receive some television channels, and even encrypted programs, that have technical limitations on the services available to users. The following types are known:
- small handheld terminals, sometimes integrated with others system (e.g. GSM, UMTS, WiFi, etc.) with an integrated antenna so that they can receive signals even when on the move;
- portable or pocket television sets with an external or extractable antenna, suitable for receiving indoors and outdoors while the receiver is kept still or moving only slowly (pedestrian).

These mobile terminals are designed to receive and decode audio/video signals in the standard known by the name of Digital Video Broadcasting - Handheld (DVB-H). This is the standard adopted by the European DVB consortium for a terrestrial radio broadcasting mode designed to transmit TV, radio and multimedia programmes to handheld devices. It works by combining the digital video standards with the Internet protocol (IP) so as to divide the content into packets of data to transfer to the mobile phone for the user to read. The weight of the data is thus reduced and the data being sent preserves a fairly good video quality. Using the IP also makes it possible to transmit video packets (DVB streaming) simultaneously and on the same channel with data packets for use by applications on the receiver terminal (IP Datacast), such as the news, financial information, multimedia content, file transfers, as well as high-speed Internet access, using the mobile phone network's return channel for interactivity with the service.

The known handheld devices have drawbacks due essentially to the currently available mobile TV service, which can be brought down mainly to the following factors:
- a limited geographical coverage;
- poor quality of the signal received, both on the move and indoors, which has the effect of causing a deterioration in broadcasting quality;
- a reduced view of the image (display dimensions/format) transmitted by the specific terminal;
- a limited number of channels received, be they free-to-air or pay-to-view, prepared by the mobile operator;
- it is impossible to retransmit the TV signal onto a second screen (viewing is confined to the mobile device alone) and, even if this were made possible by the operator, the drawback of the small dimensions of the format viewable with a single-channel display would remain the same;
- it cannot be considered as an interactive tool, since it is generally used as a means of entertainment for very brief periods of time;
- the battery is rapidly used up by any prolonged TV viewing;
- the devices have limited internal modular functionalities (no multimedia functions) because they have been designed to serve mainly as a telephone;
- the constraints on the programming schedule for the array of channels established by the mobile operator concerned, with no chance to record anything or use an *on demand* option for the desired channel.

A new digital video standard has recently been developed, known by the name of DVB-SH (Digital Video Broadcasting - Satellite services to Handhelds) deriving from an evolution of the DVB-H, as a solution intended to create a new model of television on mobile devices that would guarantee it great success and full usage. In addition to offering a better technical performance than the DVB-H, the DVB-SH standard introduces the concept of a solution for the "hybrid" mobile TV, capable of using satellite and terrestrial signal carriers simultaneously, thereby enabling a better use of the existing infrastructure and assuring a wider geographical coverage, thanks to the satellite support.

Hence the need to develop an apparatus that offers an open solution in terms of the reception, decoding and retransmission of several multistandard digital audio, video and data signals that overcomes the limitations and drawbacks of the above-described known solutions, that is capable of interacting with new-generation signals, such as the DVB-SH, while also providing integrated interactive and multimedia functions.

### Summary of the invention

The object of the present invention is a wireless, mobile apparatus suitable for simultaneously receiving, decoding and retransmitting multistandard digital audio/video and data signals, that is proposed as an easily-carried, integrated and flexible device suitable for the combined and independent reception of several signals transmitted over the air, e.g. by satellite or terrestrial carriers, and capable of using different decoding technologies for the different types of signal carried (as a non-limiting nor binding example, this may mean the joint use of satellite and terrestrial carriers, thus affording access to a vast array of digital channels both free-to-air and pay-to-view, such as DVB-SH and DVB-T), with a greater coverage and quality of the signal received, for use both indoors and outdoors, enabling the user to choose how and where to view the content of the programmes being broadcast.

A whole range of multimedia functions are offered inside a single instrument, such as the direct video recording of the programmes being broadcast, the functions known as "Time Shifting" and "Personal Video Recording" (PVR), a multimedia audio and video file reader in various standards (as a non-limiting example: MPEG2, MPEG4, DivX and MP3). Another function concerns the interaction with the television broadcaster by means of a return channel that can be implemented over the radio mobile network. The apparatus operates preferably in wireless mode to transmit the images and reproduce the sound on external devices.

The object of the present invention is a wireless mobile apparatus suitable for receiving, decoding and retransmitting several multistandard digital audio/video and data signals, comprising:
- a unit (1) that receives and demodulates digital audio/video and data signals in the various formats available over the air, designed to receive one or more data streams of said signals in wireless mode and to ensure their decoding and error control;
- a multistream arranger unit (2) that receives said data streams from said receiver and demodulator unit, simultaneously processing and carrying several digital streams relating to separate digital audio/video and data signals, and combining them into a single output stream;
- a main processing unit (3) that processes and manages said single stream;
- a wireless unit (4) for transmitting the decoded signal that it receives from said main processing unit, sending it to one or more receiver unit(s) (5) connected to corresponding viewer unit(s).

A particular object of the present invention is a wireless mobile apparatus for receiving, decoding and retransmitting several multistandard digital audio/video and data signals as explained in more detail in the following claims, which form an integral part of the present description.

### Brief description of the figures

Further characteristics and advantages of the invention will become more evident in the light of the detailed description of a preferred, but not exclusive embodiment of the apparatus forming the object of the invention, given as a non-limiting example, with the aid of the attached drawings, wherein:
Fig. 1 is a flow chart of a unit for receiving and demodulating signals, for instance, as a non-limiting example, of the DVB-SH and DVB-T type, in the apparatus according to the invention;
Fig. 2 is a flow chart of a multistream arranger unit in the apparatus according to the invention;
Fig. 3 is a flow chart of a main processing unit in the apparatus according to the invention;
Fig. 4 is a flow chart of a wireless transmitter unit in the apparatus according to the invention;
Fig. 5 is a flow chart of a wireless receiver unit in the apparatus according to the invention.

The same numbers and the same letters used for reference in the figures identify the same elements or components.

### Detailed description of a preferred embodiment of the invention

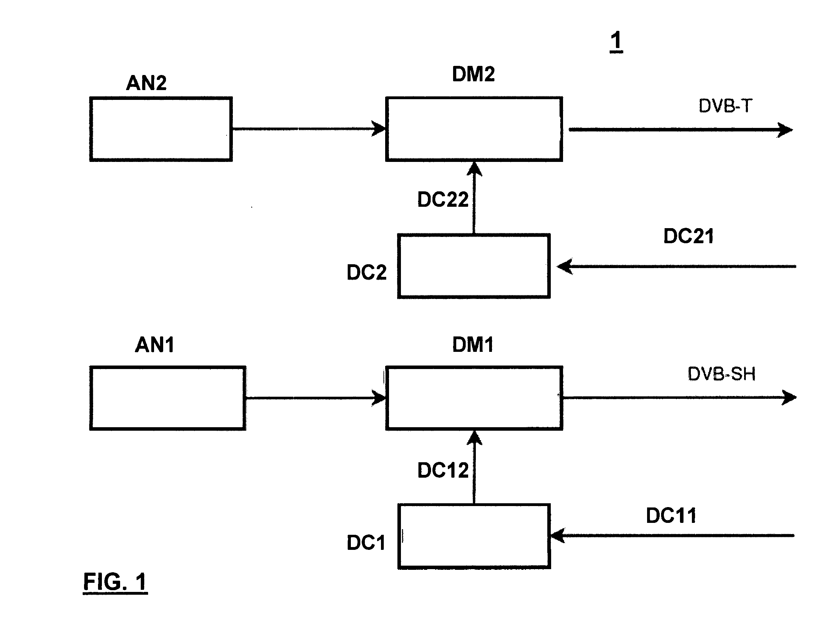

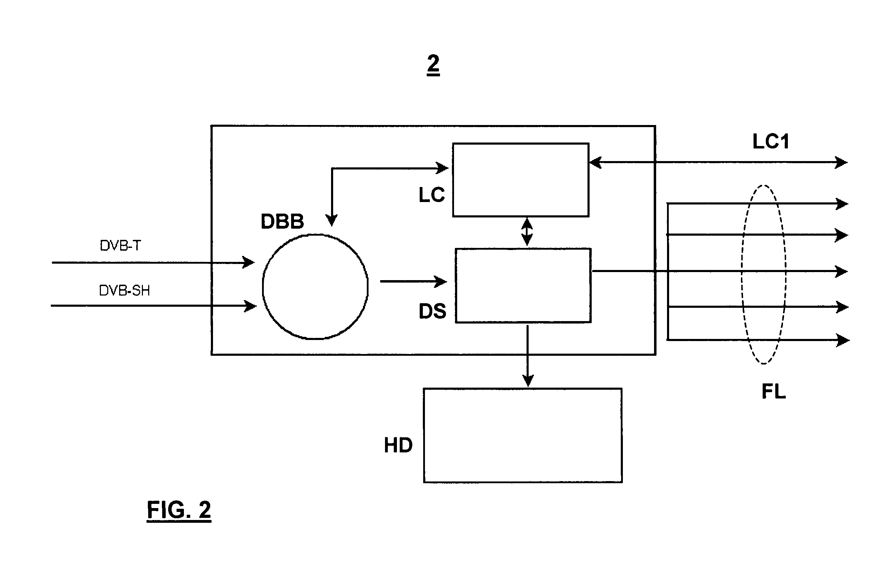

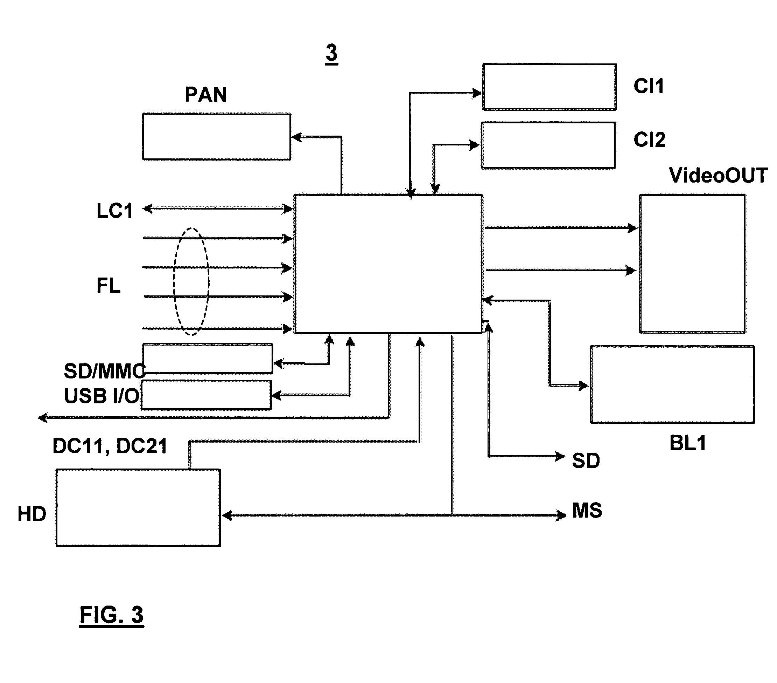

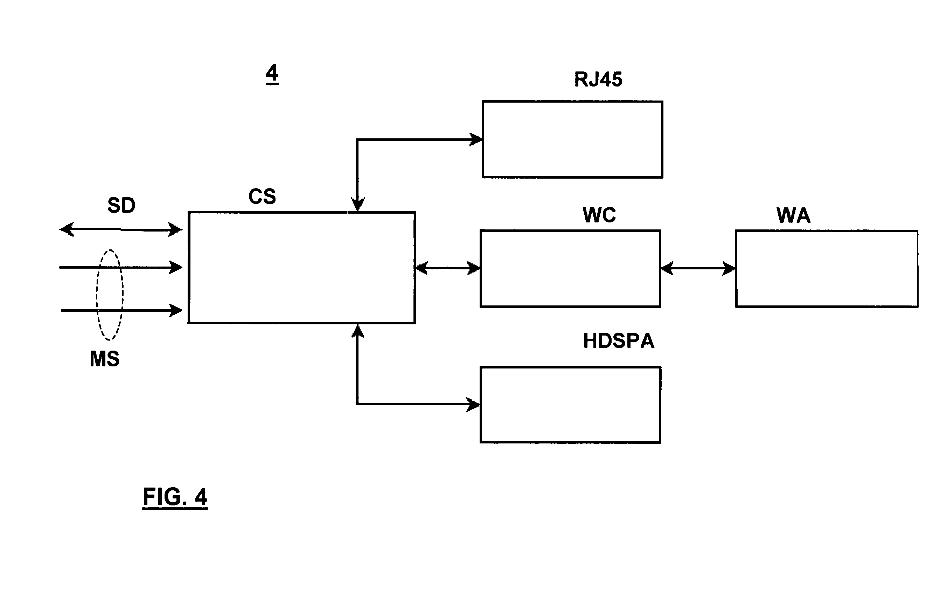

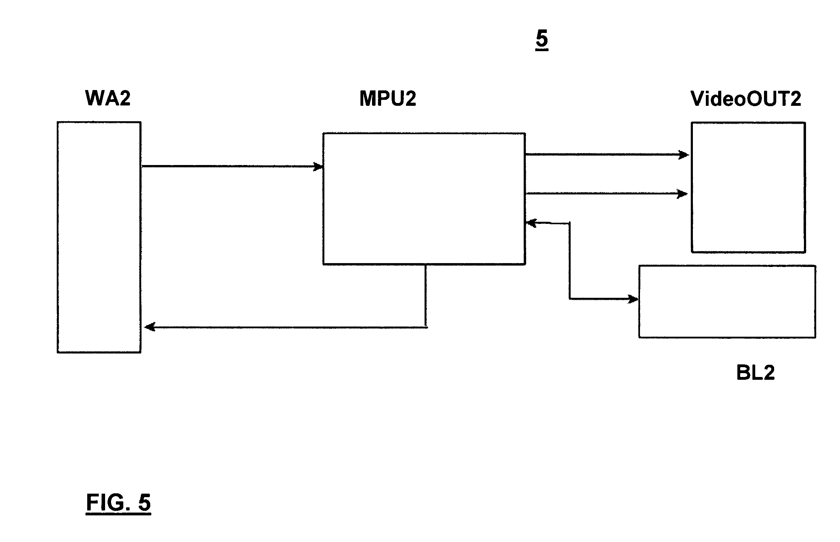

With reference to the figures, the apparatus according to the invention comprises the following main functional assemblies:
- a unit 1 (figure 1) for receiving and demodulating signals, which may be, as a non-limiting example, of the DVB-SH and DVB-T type, that receives one or more streams of data coming over the air, e.g. via satellite or terrestrial transmitters (hereinafter called "bitstreams"), decoding them and checking them for errors according to the transmission specifications;
- an assembly called a multistream arranger 2 (figure 2) that simultaneously picks up, processes and carries several digital streams relating to separate video channels and combines them into a single stream, that it makes available to the main processing unit;
- a main processing unit 3 (figure 3) that manages all the peripherals integrated in the device;
- a wireless transmitter unit 4 (figure 4) that sends the decoded audio/video and data signals to enable them to be viewed on televisions, computers and mobile units located in the vicinity of the set-top box;
- one or more wireless signal receiver unit(s) 5 (figure 5) for receiving the signals sent by the transmitter unit, to be installed in association with respective viewing means, equipped for instance, as a non-limiting example, with an HDMI connection to enable the connection of the more modern viewer units, but also with a SCART and S-Video connection for compatibility with older-fashioned television sets.

The above-mentioned flow charts are described in detail in the following paragraphs.

### Signal receiver and demodulator unit

With reference to figure 1, the apparatus according to the invention enables the reception of several simultaneous streams independently, each coming from its own signal receiver, so the input to the apparatus includes various demodulators equipped with integrated antennas in suitable circuits for signals that may be, as a non-limiting example, in the DVB-SH and DVB-T standards, i.e. one antenna AN1 in S-band for the DVB-SH signal, and one antenna AN2 in L-band for the DVB-T signal, to optimise the quality of both the satellite (DVB-SH) and the digital terrestrial (DVB-T) signal reception.

As a non-limiting example, Fig.1 shows a flow chart for a receiver and demodulator unit (with support for a double antenna integrated in a single chipset). Said chipset considerably improves the signals reception quality, offering in a single solution a 4-band multimode receiver complete with a double RF tuner supporting the VHF, UHF, S-band and L-band frequencies, with an incorporated double demodulator that enables the DVB-T and DVB-SH signals to be received and delivers them as output in the form of a bitstream.

Each antenna AN1, AN2 is connected to a demodulating module, DM1, DM2, that obtains the complete bitstream, completes all the decoding procedures, including the error correction (e.g. the well-known FEC) established by the communication protocol.

Each demodulator is complete with a control unit DC1, DC2, managed by the main processing unit by means of two-way connections DC11, DC21, that provides all the demodulating parameters DC12, DC22, for the reception of the chosen service, and particularly the frequency and the type of demodulation to perform, and any other information needed to decode encrypted channels.

The bitstream received may contain various types of data. In the case of the dual reception of DVB-SH and DVB-T signals, as in the above-mentioned example, the streams of data managed by the apparatus will be:
1) an MPEG2 bitstream for the DVB-T receiver;
2) an MPEG4 bitstream for the DVB-SH receiver.

The various circuit blocks in the receiver and demodulator unit in fig. 1 can be achieved in a substantially known manner, since the signals that the unit receives as input and provides as output, and the manner of their processing, are known.

### Multistream arranger

With reference to figure 2, the receiver and demodulator unit provides the multistream arranger unit with several separate bitstreams relating to the signals it receives, that may contain various kinds of information, particularly digital audio/video and data streams, EPG information for guides to the programs, information on how to access encrypted content.

The multistream arranger unit collects and processes the incoming streams relating to the various separate channels and combines them into a single Stream FL that is made available to the processing unit, already optimised for wireless retransmission, based on what the user has specified by means of the control interface; this information is needed to assure the receiver a feedback so that the incoming signals can be demodulated in real time. The new stream FL thus processed is delivered to the central processing unit.

The multistream arranger unit delivers a particular video stream for saving directly in a mass memory, e.g. a solid-state Hard Disk Drive, HDD, which is useful for recording a selected transmission in a file.

The multistream arranger unit comprises the DBB and DS circuit blocks, which can:
- receive the audio/video and data streams coming from the receiver unit, implementing and controlling their distribution to the main processing unit, combining all the data in transit coming from the receivers;
- optimise and combine the various incoming signals, capturing the corresponding bit streams and retransmitting them, after suitable processing and encapsulation, as a stream of output signals FL such as: data stream, main optimized stream, EPG data, conditional access data, RAW data and any others available in the digital package being decoded;
- saving any input stream directly in the mass memory (e.g. the hard disk HD) on request.

The multistream arranger unit also comprises a control logic LC suitable for communicating with the main processing unit, by means of the bus LC1, so as to tune its operation with the choices made by the user (pre-selected channels to record, operating parameters, etc.).

The functions of the multistream arranger are implemented by using an electronic part and dedicated software for treating the various signals, with chips dedicated to this purpose, and with a logical processing optimised for combining the different streams into a single logical structure. Said functionality can be programmed, for instance, directly on a customised electronic FPGA equipped with the inputs needed to retrieve the various digital signals and a dedicated software for processing the various inputs and constructing a single digital stream comprising all the audio, video and other data, optimised directly for retransmitting to the receiver unit.

### Main processing unit

With reference to figure 3, the main processing unit performs the following functions:
- it manages viewing by means of an appliance wired directly to the device: for this connection, there may be, for instance, is a non-limiting example, a digital transfer modality (HDMI) and an analog option (SCART) for greater compatibility with more obsolete systems;
- it manages a mass memory unit, such as a hard disk;
- it uses a provisional memory where it saves the bitstreams received to enable their reproduction at a later time (time shifting function);
- it provides access to the mass memory unit for viewing audio/video data (PVR function) previously recorded or downloaded in the device by means of an external USB interface;
- it retransmits the audio/video streams received by means of a wireless transmission module (described below, fig. 4).

The processing unit comprises control electronics with a suitable memory and an operating system dedicated to managing the above-described functionalities.

As for the user interface, this allows for the use of a remote control for controlling the device: as a non-limiting example, this may involve using a technology such as UPnP via a Bluetooth interface; the remote control enables the user to tune into the channels contained in one or more input signals, or to access the multimedia content stored in the hard disk.

To view the configuration data, there is a small panel PAN that provides information in text mode. But it is also possible to develop applications that can be connected to the apparatus via a Bluetooth interface, or a Wi-Fi or Ethernet interface.

To receive pay-to-view programs, there are qty 2 Common Interface slots Cl1, Cl2, compatible with the ISO 7816 standard, to enable the installation of suitable CAMs that can manage specific codes (e.g. Nagravision and Irdeto) in combination with the smartcards sold by the distributors of these services.

The main processing unit consequently includes the following functional entities:
- the main processing unit, MPU: a unit for processing consisting of a low-consumption main processor, an adequate quantity of memory integrated directly in the board, and components for managing data communications (Bus) inside the device. This unit is capable of delivering widely-used audio/video formats of various kinds (e.g. MP3 and DivX); this functionality can be managed directly by the main processor by means of suitable software tools, or this can be done by installing specific hardware units available on the market.
- USB I/O: a USB port for downloading and transferring films recorded on the device.
- data storage media HD: a solid-state hard disk with a capacity large enough to guarantee adequate opportunity for storage at a limited cost;
- SD/MMC card reader: an SD and MMC card reader for reading external files;
- display panel PAN: a small panel for displaying text (e.g. 60 mm x 10 mm) for viewing essential data (such as the channel number);
- Bluetooth interface BL1: for managing the remote control and any compatible devices;
- Common Interface ports Cl1, Cl2: two ports suitable for receiving smart cards;
- video OUT: SCART, S-Video and HDMI cable connectors for reproducing a film selected by means of the remote control;
- there is also a connection for an optional video panel to be able to use the services while on the move. This may consist of an external monitor of very compact dimensions (8" would be a suitable size, for instance). The connector provides an HDMI video connection and a power supply from the battery serving the apparatus; the management software is complete with a specific function that enables a video stream to be carried to the external viewer.

The various circuit blocks in the main processing unit in figure 3 can be achieved in a substantially known manner, so there is no need to describe the circuitry in further detail here.

### "Wireless" data transfer unit

One of the innovative features of the apparatus is that the main processing unit enables the signal received or previously stored in the hard disk to be retransmitted to a series of compatible devices located nearby.

With reference to figure 4, the wireless data transfer unit comprises a Wi-Fi card compatible with the 802.11 protocol, equipped with a wireless controller WC and a wireless antenna WA, suitable for configuring as an access point in a wireless network, for managing using the most advanced protection protocols (e.g. WEP and WPA).

The configuration of the wireless parameters and associated encryption keys can be done using simple, user-friendly systems suitable for a consumer, which minimise the actions the user needs to take and the know-how needed to do so(for example, as a non-limiting example, this might involve using the known "Tag Rfid" technology).

For use in a wired environment, there is a network interface RJ45 for connecting the system to an Ethernet-type local area network LAN.

The apparatus also incorporates a radio mobile connection device that can be used, complete with a data card that is enabled by the operator, to interact with media distributors in order to purchase encrypted programmes and events.

The apparatus can also be used for connecting to broadband Internet, thus acquiring the optional functionalities of a wireless router, so it is suitably equipped with a modem that enables a radio mobile connection according to the latest technologies.

The data transfer unit comprises a circuit block serving the purpose of "content server" CS, i.e. a unit that manages the incoming bitstreams, received from the main processing unit, essentially comprising service data SD and a main stream MS (in the standards MPEG2, MPEG4, DivX, for example). The CS distributes the bitstreams to the various appliances that can be connected via the wireless network. The CS unit is fitted with a memory suitably sized to store the bitstreams temporarily. It is also possible, however, to have this functionality managed directly by the main control unit.

The "content server" circuit block CS can be made in a substantially known manner, so there is no need to describe the circuitry in further detail here.

### Receiver unit for receiving the signal sent by the data transfer unit

The unit that receives the signal sent by the apparatus can be located in the vicinity of a viewing device, e.g. a television set.

With reference to figure 5, the receiver unit can perform the following operations:
- configuration of the wireless network parameters: this can be done by means of a Bluetooth interface BL2 and the remote control used for the main device. The remote control is used both for the initial configuration of the unit (which includes setting the safety parameters) and for accessing the main unit and selecting one of the services available;
- reproducing films transmitted in UPnP mode, for instance (as a non-limiting example), and received by means of a 802.11 wireless adapter unit WA2. For this purpose, said unit is fitted with hardware means for reproducing bitstreams that are delivered as output via the VideoOUT2 connections, e.g. the SCART, S-Video and HDMI cable connectors, to enable the reproduction of the film selected by means of the remote control.

The receiver unit can receive and distribute the bitstreams in the formats received from the data transfer unit (e.g. MPEG2, MPEG4, DivX), and that is why it is fitted with a processing unit MPU2 with functionalities similar to those of the processing unit MPU in the main unit inasmuch as concerns the capacity to reproduce the audio/video signals.

A connection to the electric mains power supply is provided (situated in the vicinity of a viewing device) so it is not necessary to take any particular steps to optimise the power consumptions.

The receiver unit can be made in a substantially known manner, so there is no need to describe the circuitry in further detail here.

Variants to the embodiment discussed in the non-limiting example described herein can be made without departing from the scope of the present invention, which comprises all the equivalent embodiments for a person skilled in the art.

The advantages deriving from the use of the apparatus of the present invention are self-evident, the main functionalities achievable being as follows:
- the apparatus is an interactive set-top box device that satisfies the particular need to be readily portable/mobile, being designed for use both indoors and outdoors. Generally speaking, the most common functionality afforded by traditional set-top boxes is the reception of indoor television, that demands a stable connection to a TV antenna or satellite dish. In fact, the television set is always compatible with the analog terrestrial television standards, in that it is the most widespread type of television broadcasting system. Computer screens and video projectors, however, are types of electronic equipment that were never designed to receive television programmes, so they must be used in combination with an appropriate set-top box in order to serve as a television set.
- The apparatus is designed for the reception, decoding and combined and independent retransmission of several multistandard digital audio/video and data signals transmitted over the air, such as the new-generation DVB-SH signal, so it can receive a vast array of channels, both free-to-air and pay-to-view, with an optimised coverage and transmission quality, in one or more of its types of application (e.g. as a computer screen, a television or a projector), while at the same time offering the user total freedom in the choice of where and how to view the TV programmes, e.g. in the car, at home, or in the office.
- The apparatus processes several input signals and is able to retransmit them simultaneously to the peripherals that receive several of audio/video/data channels with no restrictions on their usage (as a non-limiting example: DVB-T on the move, DVB-SH in a residential setting, or when using the service to record the DVB-T channel in the lounge while watching the DVB-SH channels in the bedroom).
- Inside a single product, the apparatus integrates a series of multimedia functions, such as the opportunity to obtain direct video recordings of the programmes being broadcast, the functions known as "Time Shifting" and "Personal Video Recording" (PVR), a multimedia reader of audio and video files in various standards (e.g. MPEG2, MPEG4, DivX and MP3), enabling total control over the audio and TV programmes being transmitted.
- The user can interact with the television broadcaster, even while on the move, by means of a return channel, exploiting a data link on the latest-generation radio mobile network.
- The images are transmitted and the sound is reproduced on external devices preferably in wireless mode, since an integrated transmitter is available.
- A dedicated peripheral has been developed (for an optional LCD display).
- The apparatus can be powered in a domestic setting from an electric power socket; while on the move, it can be powered by a battery sized to suit its usage and, where necessary, by a plug-in connector for the car.

## Claims

1. A wireless apparatus for receiving and decoding multistandard digital audio, video and data signals, comprising:
- a unit (1) for receiving and demodulating digital audio/video signals in the various formats available over the air, suitable for receiving one or more bitstreams of said signals in wireless mode and performing their decoding and error control;
- a multistream arranger unit (2) that receives said bitstreams from said receiver and demodulator unit, processing them and simultaneously carrying several digital bitstreams relating to audio, video and digital data signals, and combining them into a single output stream;
- a main processing unit (3) that processes and manages said single stream;
- a wireless unit (4) that transmits the decoded signal received from said main processing unit and sends it in wireless mode to one or more receiver units (5) connected to corresponding viewer units.

2. An apparatus according to claim 1, wherein said receiver and demodulator unit (1) comprises means for independently receiving said one or more simultaneous streams coming from corresponding signal receivers (DVB-SH, DVB-H, DVB-T), with corresponding different demodulators equipped with integrated antennas at its input.

3. An apparatus according to claim 2, wherein said means for independently receiving said one or more simultaneous streams are also suitable for performing all the decoding procedures, including error correction, and they comprise respective control units that provide the demodulation parameters for receiving the required service, and particularly the frequency and the type of demodulation to perform, and any necessary information for decoding encrypted channels.

4. An apparatus according to claim 1, wherein said multistream arranger unit (2) comprises means (DBB, DS) suitable for:
- receiving the audio/video streams coming from said receiver and demodulator unit (1), ensuring and controlling their distribution to said main processing unit (3);
- optimising and combining the various input signals, obtaining the corresponding bitstreams from them and combining these to provide as output in a single stream (FL) of signals in a format comprising: Data stream, Main optimized stream, EPG data, Conditional access data, RAW data;
- saving an input bitstream directly in a mass memory (HD);
it also comprises a control logic (LC) suitable for communicating with said main processing unit, so as to adjust its mode of functioning to the user's choices, such as a selected channel to record or other operating parameters.

5. An apparatus according to claim 1, wherein said main processing unit (3) comprises means suitable for:
- managing viewing with a wired appliance, by means of a digital (HDMI) and analog (SCART) transfer mode;
- managing a mass memory unit;
- using a provisional memory for saving the bitstreams received to enable their time shifted reproduction;
- accessing the mass memory units to view the audio/video data recorded or downloaded therein by means of an external interface (USB);
- retransmitting the audio/video streams received via said wireless transmitter unit; and also comprises a control logic suitable for managing said functions.

6. An apparatus according to claim 5, wherein said main processing unit (3) comprises one or more of the following means:
- a main processing unit (MPU) suitable for delivering audio/video formats of various kinds;
- one or more USB ports for downloading and transferring recorded films;
- a mass memory unit (HD);
- one or more SD and MMC card readers for reading external cards;
- a panel (PAN) for displaying service-related text, for viewing essential date;
- one or more Bluetooth interfaces (BL1), for managing a remote control and any other compatible devices;
- one or more Common Interface ports (Cl1, Cl2), suitable for receiving smart cards;
- one or more cable connectors (SCART, S-Video, HDMI) for the reproduction of films selected by means of the remote control.

7. An apparatus according to claim 1, wherein said wireless transmitter unit (4) comprises one or more of the following means:
- a Wi-Fi card compatible with the 802.11 protocol and complete with a wireless controller (WC) and a wireless antenna (WA), suitable for being configured as an access point in a wireless network, with protection protocol management;
- a network interface (RJ45) for connecting the system in a wired environment to an Ethernet-type local area network LAN;
- a radio mobile connection device, preferably equipped with an HDSPA-type modem, that enables interaction with broadcasters to enable the purchase of encrypted programmes and events;
- a circuit block serving as a "content server" CS, that manages all the incoming bitstreams that it receives from said main processing unit and that it distributes to the outputs.

8. An apparatus according to claim 1, wherein said receiver unit (5) comprises means suitable for:
- configuring the parameters of the wireless network by means of a Bluetooth interface (BL2) and a remote control;
- reproducing audio/video signals transmitted in Bluetooth mode and received by said wireless transmitter unit (4) via a 802.11 wireless adapter unit (WA2), preferably equipped with hardware devices for reproducing the bitstreams delivered as output via wired connections (VideoOUT2) for the reproduction of said audio/video signals selected by means of the remote control.
